# FASCICULE DE BREVET EUROPEEN

(11) **EP 2 298 065 B1**
(45) Date de publication et mention de la délivrance du brevet: **27.05.2015**
(21) Numéro de dépôt: 10306005.9
(22) Date de dépôt: 21.09.2010
(51) Int. Cl.: A01G 25/16

(54) **Procédé de commande de l'arrosage notamment d'un terrain et système pour la mise en oeuvre du procédé**
Bewässerungsverfahren für eine Fläche und dafür vorgesehene Vorrichtung
Irrigationprocess for a field and a device therefore

(30) Priorité: 21.09.2009 FR 0956475
(43) Date de publication de la demande: 23.03.2011
(73) Titulaire: Maquaire, Fanny, 06800 Cagnes sur Mer (FR)
(72) Inventeur: Maquaire, Fanny, 06800 Cagnes sur Mer (FR)
(74) Mandataire: Thinat, Michel

(56) Documents cités:
- WO-A1-95/22799
- WO-A2-2007/005834
- US-A- 5 465 904
- US-A1- 2004 013 468
- US-A1- 2004 039 489

## Description

L'invention concerne un procédé de commande de l'arrosage notamment d'un terrain, selon lequel on modifie un programme d'arrosage de référence en fonction des prévisions météorologiques, ainsi qu'un système d'arrosage pour la mise en oeuvre de ce procédé.

Les procédés et systèmes de ce type, qui sont connus par exemple de WO 9522799, présentent l'inconvénient d'être très complexes et donc coûteux. Entre autres, ils nécessitent souvent un formatage spécifique des données météorologiques. Leur complexité et leur prix relativement élevé s'opposent à un arrosage individuel et spécifique de parcelles de terrain de relativement faible étendue, puisque cela nécessiterait la mise en place d'un nombre de dispositifs d'arrosage relativement important.

L'invention a pour but de pallier cet inconvénient.

Pour atteindre ce but, le procédé de commande de l'arrosage selon l'invention est **caractérisé en ce que** l'on définit un certains nombres de catégories de situations relatives à la précipitation d'eau de pluie, chaque catégorie déterminant un processus décisionnel de la modification du programme d'arrosage de référence, en ce que l'on traite les informations météorologiques reçues et à prendre en compte de façon qu'elles puissent être attribuées à une desdites catégories et provoquent la modification de l'arrosage de référence en fonction du processus de modification résultant de cette catégorie.

Selon une caractéristique de l'invention, le procédé est **caractérisé en ce que** l'on définit une catégorie "eau" et en ce que l'on attribue à cette catégorie l'annonce d'une précipitation d'eau de pluie, la catégorie "eau" entraînant une suspension de l'arrosage de référence.

Selon une autre caractéristique de l'invention, le procédé est **caractérisé en ce que** l'on définit au moins une catégorie "incertain", à laquelle on attribue des situations qui ne sont pas assimilables à "eau" et "manque d'eau" et dont le processus de modification de l'arrosage de référence nécessite la prise en compte supplémentaire des catégories d'au moins la période précédente.

Selon une autre caractéristique de l'invention, le procédé est **caractérisé en ce que** l'on attribue également à certaines situations de température et de vent les catégories eau, incertain et manque d'eau, ces catégories étant utilisées pour orienter les catégories incertain établies à partir des données relatives aux précipitations d'eau, vers les catégories eau ou manque d'eau.

Selon une autre caractéristique de l'invention le procédé est **caractérisé en ce que** la modification de l'arrosage de référence consiste à moduler la durée et/ou la fréquence d'arrosage.

Le système pour la mise en oeuvre du procédé est **caractérisé en ce qu**'il comprend un dispositif micro-électronique pourvu d'un microprocesseur et des moyens mémoire, adaptés pour recevoir des informations météorologiques en provenance d'au moins un serveur d'informations météorologiques, avantageusement par le réseau internet.

L'invention sera mieux comprise, et d'autres buts, caractéristiques, détails et avantages de celle-ci apparaîtront plus clairement dans la description explicative qui va suivre faite en référence aux figures schématiques annexées donnée uniquement à titre d'exemple illustrant un mode de réalisation de l'invention et dans laquelle :
- la figure 1 est une représentation schématique du système selon l'invention, et
- les figures 2A, 2B et 2C donnent trois pictogrammes relatifs à des situations météorologiques.

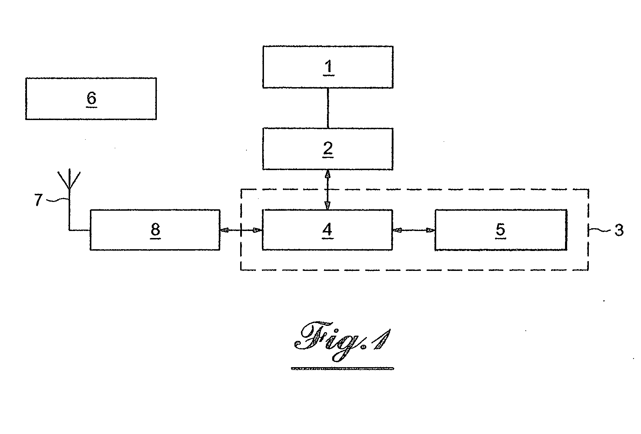

La figure 1 illustre schématiquement un système de commande de l'arrosage notamment d'un terrain 1, selon l'invention, qui s'avère être d'une grande simplicité et comprend un dispositif d'arrosage standard 1 auquel est associé, par l'intermédiaire d'une interface 2, un ordinateur 3 comportant essentiellement une unité centrale de commande 4 et un dispositif mémoire 5. L'ordinateur reçoit des informations météorologiques d'un ou de plusieurs organismes 6 de prévision météorologiques, avantageusement par l'intermédiaire d'un réseau de transmission de données, tel qu'internet, par exemple à l'aide d'une antenne 7.

Le système selon la figure 1 met en oeuvre le procédé qui sera décrit ci-après. De façon générale, l'ordinateur extrait des informations météorologiques locales, c'est-à-dire concernant la région où se trouve le dispositif d'arrosage, qui lui parvienne à travers l'internet, des informations qui concernent spécifiquement le problème des précipitations d'eau de pluie, attribue les informations extraites à une pluralité de situations types de précipitations et commande le dispositif d'arrosage en fonction de la situation type à laquelle sont attribuées les informations extraites. Pour assurer une commande fiable, c'est-à-dire adaptée aux conditions réelles du besoin d'eau du terrain, l'ordinateur peut prendre en compte les informations météorologiques des jours précédents et les prévisions météorologiques pour les jours qui suivent, en consultant les données qui sont stockées dans la mémoire 5.

On décrira ci-après de façon détaillée l'algorithme de traitement des données qui permettent la commande du dispositif d'arrosage 1 selon les informations météorologiques locales que l'ordinateur reçoit du ou des organismes de prévision météorologiques. Le système connaît l'adresse du site du serveur ou des serveurs météorologiques qui lui envoient les informations et le formatage des données envoyées. En fonction du formatage existant et disponible du site serveur, l'ordinateur peut extraire les mots clés qu'il va utiliser pour la commande du dispositif d'arrosage. Ces mots clés peuvent être associés à trois catégories, à savoir la catégorie pluie qui signifie " eau ", la catégorie " incertain ", la catégorie " soleil " qui signifie manque d'eau. De plus, le vent et la température, associés chacun à un seuil, de la façon indiquée sur le tableau 1 qui suit, aideront à classer les incertains en orientant la décision vers la catégorie " eau " ou la catégorie " manque d'eau ".

Concernant le fonctionnement du système selon l'invention, après une phase de démarrage, l'unité centrale 4 est disponible et active le dispositif de connexion 8 à internet, avantageusement un système de type WIFI, et demande de recevoir des informations en fournissant l'adresse des pages internet à consulter, du serveur des informations météorologiques 6. Il reçoit alors le contenu des pages et les stocke dans ces mémoires locales 5. Il pourrait commencer chaque série de traitement de données par la consultation d'une page fournissant la date et l'heure, par exemple pour régler la date et l'heure la première fois au démarrage, puis ensuite pour se resynchroniser si besoin. Il pourrait ensuite récupérer les données météorologiques du site internet indiqué dans sa mémoire de démarrage, contenant le programme de démarrage.

Puis l'unité centrale consulte en local, selon l'algorithme de traitement des informations correspondant, les données concernant les jours précédents stockés dans la mémoire. L'algorithme de traitement des données est détaillé plus loin. Dans la phase suivante, l'unité centrale écrit les données météorologiques du jour actuel ainsi que sa décision concernant la commande à adresser au dispositif d'arrosage 1 dans la mémoire. Dans une dernière phase il active l'interface 2 au dispositif d'arrosage automatique pour que la décision soit transmise au dispositif d'arrosage 1 et celui-ci commandé en conséquence.

Concernant l'algorithme de traitement des données, l'ordinateur connaît le formatage des données qu'il reçoit du ou des sites météorologiques des serveurs fournisseurs des informations météorologiques.

En s'adaptant au formatage fait par le site, il extrait du flux d'informations téléchargé en code source (format texte), les mots clés qui concernent les précipitations d'eau de pluie. Ces mots clés peuvent être associés à trois catégories, à savoir la catégorie pluie, c'est-à-dire " eau ", la catégorie " incertain ", et la catégorie " soleil " qui signifie le manque d'eau. De plus, l'ordinateur peut établir aussi ces trois catégories à partir de seuil du vent et de la température, qu'il extrait du flux d'informations météorologiques. Les différentes situations catégories qui peuvent se présenter sont indiquées dans le tableau 1 qui suit. Les catégories de ce tableau peuvent être utilisées pour orienter les catégories "incertain" établies à partir des données relatives aux précipitations d'eau, vers la catégorie " eau " ou la catégorie " manque d'eau ".

**Tableau 1**

| Vent | Température | Catégorie |
|---|---|---|
| Vent < seuil | Temp. < seuil | Eau |
| Vent < seuil | Temp. > seuil | Incertain |
| Vent > seuil | Temp. < seuil | Manque d'eau |
| Vent > seuil | Temp. > seuil | Manque d'eau |

Les informations concernant les jours précédents au jour actuel seront conservées pour une durée prédéterminée, par exemple une semaine.

Les informations extraites permettent de dresser un tableau simplifié de la situation, comme le montre le tableau 2 qui suit.

**Tableau 2**

| Jour / Ligne | Situation |
|---|---|
| J-7 | |
| J-6 | |
| J-5 | |
| J-4 | |
| J-3 | |
| J-2 | |
| J-1 | |
| **Présent " P "** | |
| **Prochaines 24h " J "** | |
| J+1 | |
| J+2 | |
| J+3 | |

Pour prendre une décision quant à arroser ou non, il faut établir la périodicité de l'arrosage automatique. Dans le présent exemple qui n'est pas exclusif, on suppose que la périodicité est de 24 heures. Les lignes " Présent "P "" et " Prochaines 24h "J"" concernent donc le jour actuel et le jour suivant. Les lignes au-dessus J-1 et en dessous J+1 à J+3 concernent les jours avant et les jours suivants aux jours P et J.

La situation établie pour chaque jour mais laissée vide au Tableau 2 est un parmi les neuf cas qui sont indiqués au tableau 3 qui suit.

**Tableau 3**

| Cas | Jour P | Jour J | Décision ou coefficient 1 |
|---|---|---|---|
| 1 | Eau | Eau | Suspendre |
| 2 | Eau | Incertain | 1 |
| 3 | Eau | Manque d'eau | 2 |
| 4 | Incertain | Eau | 1 |
| 5 | Incertain | Incertain | 2 |
| 6 | Incertain | Manque d'eau | 3 |
| 7 | Manque d'eau | Eau | 2 |
| 8 | Manque d'eau | Incertain | 3 |
| 9 | Manque d'eau | Manque d'eau | 4 |

Le tableau 3 sert à attribuer à un coefficient C1 un chiffre variant de 1 à 4, qui exprime la probabilité de nécessité d'arrosage croissante. Bien entendu l'attribution des coefficients n'est donnée qu'à titre d'exemple. Parmi les différents cas indiqués seulement le cas 1 permet de prendre la décision immédiate de suspendre l'arrosage automatique. Pour les autres cas 2 à 9, il convient de rechercher un second critère dans les informations qui concernent les jours précédents.

Le Tableau 4 est donné à titre d'exemple pour fournir le critère supplémentaire. Le tableau donne les catégories qui ont été établies pour les jours J-1, d'une part, et J-2 et J-3 moyennes, d'autre part. Les différents cas A à I retenus conduisent soit à une décision probante soit à qualifier un coefficient C2 avec les probabilités 1 à 4 de nécessité d'arrosage croissante.

**Tableau 4**

| Cas | Jour J-1 | Jour J-2 et J-3 moyennes | Décision ou coefficient C 2 |
|---|---|---|---|
| A | Eau | Eau | Suspendre |
| B | Eau | Incertain | 1 |
| C | Eau | Manque d'eau | 2 |
| D | Incertain | Eau | 1 |
| E | Incertain | Incertain | 2 |
| F | Incertain | Manque d'eau | 3 |
| G | Manque d'eau | Eau | 2 |
| H | Manque d'eau | Incertain | 3 |
| I | Manque d'eau | Manque d'eau | Arroser normalement |

Parmi les cas A à I, seulement le cas A permet la décision immédiate de suspendre l'arrosage automatique.

Pour les cas B à H du tableau 4, on va rechercher une troisième information qui prendra en compte les prévisions des jours suivants, ce qui conduit à déterminer un coefficient C3 de 1 à 3 probabilités de nécessité d'arrosage croissante. La valeur de probabilité 4 n'est pas attribuée pour diminuer le coefficient pondérateur car il s'agit ici de prévisions et non de faits. Bien entendu un autre choix pourrait être fait. Le tableau 5 qui suit indique les différents cas envisageables.

**Tableau 5**

| Cas | Jour J+1 | Jour J+2 et J+3 moyennes | Décision ou coefficient C3 |
|---|---|---|---|
| A | Eau | Eau | 1 |
| B | Eau | Incertain | 1 |
| C | Eau | Manque d'eau | 2 |
| D | Incertain | Eau | 1 |
| E | Incertain | Incertain | 2 |
| F | Incertain | Manque d'eau | 3 |
| G | Manque d'eau | Eau | 2 |
| H | Manque d'eau | Incertain | 3 |
| I | Manque d'eau | Manque d'eau | 3 |

La décision définitive à transmettre au dispositif d'arrosage 1 est obtenue par multiplication des coefficients C1, C2 et C3. On obtient ainsi, pour les cas où l'arrosage n'est pas suspendu ou bien d'ores et déjà décidé, un facteur variant de 1 à 36 qui fournit un modulateur de la durée de l'arrosage automatique tel qu'indiqué dans le tableau 6 qui suit.

**Tableau 6**

| Coefficient résultant | Durée d'arrosage |
|---|---|
| 1-2 | Divisée par quatre |
| 3-4 | Divisée par trois |
| 6-8 | Divisée par deux |
| 9-18 | *3/4 |
| 24-36 | Normale |

Si l'on souhaite d'obtenir un système plus simple de type " tout ou rien ", les décisions pourraient se prendre en fonction du tableau 7.

**Tableau 7**

| Coefficient résultant | Décision |
|---|---|
| 1-4 | Suspendre |
| 6-36 | Arroser |

On décrira ci-après, à titre d'exemple non exclusif, une méthode d'extraction des informations météorologiques relative aux probabilités de précipitations de l'eau sous forme de pluie, des flux d'informations météorologiques locales reçus par l'ordinateur.

L'exemple qui est donné ci-après concerne les villes de Calais et de Nice, dont les codes postaux sont respectivement 62100 et 06000. Les annexes 1 et 2 reproduisent des flux d'informations météorologiques pour respectivement Calais et Nice, en code source.

Ces flux d'informations serons exploités par deux séries de mots clés : la première série de mots clés permet de situer l'information à traiter dans le temps et/ou annoncer une information du temps prévu.

Les mots clés sont par exemple
« aujourd'hui », « demain », « mercredi », mais aussi des groupe de mots : « le temps annoncé sera », « il est prévu un temps», « le temps sera », « il fera », ... « il est prévu de» , « il est prévu du ».

La deuxième série de mots clés/pictogrammes clés sont ceux caractérisant le temps prévu, et qui seront traités par le programme ; par exemple : « beau », « ensoleillé », « pluvieux », « couvert », « orageux », « du crachin », « de la bruine », « des orages », « du soleil », « un beau temps sec ».

Le programme transformera ces divers mots clés qualifiant le temps prévu en catégories « manque d'eau », « eau » ou « incertain », en les affectant au jour P, J et suivants ; les informations P stockées précédemment donnant les catégories des jours J-1, J-2, J-3

Lorsque le site utilise fournit des indications en termes de « prévisions de pluie » ou « pourcentage de chance de pluie » l'analyse est simplifiée et l'on peut leur directement associer une catégorie « eau », « manque d'eau » ou « incertain ».

Pour simplifier l'exemple, on ne prendra ici en compte que les mots clés relatifs à la pluie ou au soleil. Les mots clés sont écrits en gras. Les jours sont, en plus, soulignés.
Pour Calais on trouve successivement :
   Pluie, Pluie, Rares averses, Averses localement orageuses, Pluies éparses, Couvert, Couvert, Soleil voilé, Pluie, Rares averses, Rares averses, Risque d'orages, Rares averses, Rares averses, Couvert.
Pour Nice :
   Soleil, Soleil, Soleil, Soleil, Nuit claire, Soleil, Soleil, Soleil voilé, Soleil voilé, Soleil voilé, Soleil voilé, Orage, Couvert, Couvert, Soleil.

Le premier mot est le temps des prochaines 24h (J). Le deuxième mot est le temps qu'il fait présentement (P). Les 6eme, 10eme, et 13eme, indiquent le temps respectivement aux jours J+1 J+2 et J+3.

Pour l'exemple pour Calais, on peut établir le Tableau 2 donné plus haut dans la forme qui suit. Le tableau est appelé Tableau 2'.

**Le tableau 2' pour Calais**

| Jour / Ligne | Situation |
|---|---|
| **Présent" P "** | **Eau** |
| **Prochaines 24h " J "** | Eau |
| J+1 | Incertain |
| J+2 | Incertain |
| J+3 | Incertain |

Dans la situation indiquée sur ce tableau, l'ordinateur décide de commander la suspension de l'arrosage aujourd'hui, quelque soit le temps des jours précédents car il pleut. On est dans le cas 1 du Tableau 3.

Pour Nice, les informations extraites donnent le Tableau 2 qui suit et qui porte la référence **2".**

**Tableau 2'' pour Nice**

| Jour / Ligne | Situation |
|---|---|
| **Présent « P »** | **Manque d'eau** |
| **Prochaines 24h « J »** | Manque d'eau |
| J+1 | Manque d'eau |
| J+2 | Manque d'eau |
| J+3 | Incertain |

La situation ressortant du Tableau 2" correspond au cas 9 du Tableau 3. On retient comme coefficient C 1 la valeur de probabilité de nécessité d'arrosage 4.

Comme il a été expliqué plus haut, dans une telle situation il faut rechercher une seconde information qui consiste à prendre en compte le temps des jours précédents. Cette information se trouve stockée dans la mémoire de l'ordinateur. En supposant que la situation des jours précédents est celle ressortant du Tableau 2" qui suit, établi selon le Tableau 2 donné plus haut, c'est le cas B du Tableau 4 qui est à prendre en compte dont le coefficient C2 a la valeur de probabilité 1.

**Tableau 2" pour Nice**

| Jour / Ligne | Situation |
|---|---|
| J-3 | Incertain |
| J-2 | Incertain |
| J-1 | Eau |

Comme cela a été expliqué précédemment en référence au Tableau 4, puisqu'il s'agit du cas B, il convient de rechercher une troisième information qui prend en compte les prévisions des jours suivants J+1, J+2 et J+3 du Tableau 2". En se reportant au Tableau 5, on constate que la situation des jours suivants correspond au cas H ou I de ce Tableau 5 qui fournit le coefficient C3. Pour chacun des deux cas, la valeur de probabilité de la nécessité d'arrosage est 3.

Après avoir recherché les seconde et troisième informations, l'ordinateur est maintenant en mesure de prendre sa décision en établissant le coefficient résultant C_{R}=C₁xC₂xC₃ = 4 x 3 x 1 = 12. Selon le Tableau 6, un coefficient résultant CR=12 indique qu'il convient de moduler l'arrosage initialement prévu d'un quart. L'arrosage demandé correspond donc à 3/4 de l'arrosage prévu.

Comme indiqué plus haut, l'ordinateur peut être programmé pour une analyse plus fine et prendre en compte des paramètres complémentaires tels que la température et le vent. Il est donc clair que des mots clés seront employés pour extraire ces informations. Par exemple pour la température : en général information écrite X°C, par exemple 25°C, et la température maximum citée dans la séquence aujourd'hui (ou demain, ou mercredi) sera retenue

Pour le vent : en général information écrite Xkm/h, par exemple 30km/h, et la vitesse maximum citée dans la séquence de la journée sera retenue.

On pourra ajouter à ces paramètres complémentaires ceux concernant la mesure des précipitations ; en général information écrite Xmm, par exemple 1,5mm, et le chiffre journalier sera retenu.

Pour obtenir ces informations, l'appareil peut avantageusement se connecter avec plusieurs sites, deux par exemple, certains sites donnant par exemple une information préférentielle sur les précipitations ;

On pourrait dans ce cas avoir alors en mémoire de l'appareil un tableau du type :

| | J-3 | J-2 | J-1 | P | J+1 | J+2 | J+3 |
|---|---|---|---|---|---|---|---|
| catégorie | eau | Manque eau | incertain | Eau | Manque eau | eau | Manque eau |
| | | | | | | | |
| tempé max | 20°C | 25°C | 24°C | 22°C | 28°C | 27°C | 29°C |
| | | | | | | | |
| vent max | 30km/h | 15km/h | 25km/h | 35km/h | 15km/h | nc | 20km/h |
| | | | | | | | |
| précipitations | 3mm | 0mm | nc | 4mm | nc | 1,5mm | 0mm |

dans lequel nc signifie « non communiqué ».

Dans le traitement tel que décrit, on peut avantageusement remplacer le tableau 4 par un tableau avec mm pluie, donnant de plus une caractérisation de l'humidité du sol :
Par exemple le tableau 4 peut être remplacé par le tableau 4bis suivant :

| | tableau 4 bis mm précipitations et indice d'humidité | | | | | |
|---|---|---|---|---|---|---|
| jour J-1 | jour J-2 | J-3 | J-4 | Cumul calculé Ou indice humidité | cas | décision ou coefficient C2 |
| 5 | 5 | 5 | 5 | 3,5 | A | Suspendre |
| 5 | 3 | 2 | 1 | 2,3 | B | 1 |
| 0 | 3 | 4 | 5 | 1,7 | G | 2 |
| 2 | 1 | 1 | 1 | 0, 9 | H | 3 |
| 0 | 0 | 0 | 0 | 0 | I | Arroser |

Pour établir l'indice d'humidité, on additionne les valeurs des jours J-1 à J-4, en prenant en compte un coefficient 1 pour J-1, 0,8 pour J-2, 0,6 pour J-3 et 0,4 pour J-4. L'affectation aux cas A, B, F et H se fait selon que les indices calculés sont supérieurs aux seuils respectivement de 3mm, 2mm, 1mm et 0,5mm.

On pourrait aussi prendre en compte la nature du sol. Par exemple pour un sol qui ne retient pas l'eau ou seulement peu d'eau, les coefficients seront augmentés en conséquence.

Dans le cas d'un système plus simple, du type à tout ou rien, il convient de se reporter au Tableau 7 qui indique que, pour un coefficient résultant CR=12 il faut arroser, c'est-à-dire conserver l'arrosage complet tel que prévu initialement.

Il est à noter que l'invention telle que décrite en se référant aux différents tableaux et figures annexes n'a été donnée qu'à titre d'exemple, pour démonter le principe d'un procédé et d'un système selon l'invention. Bien entendu, des diverses modifications peuvent être envisagées, par exemple en ce qui concerne la définition des différents cas et de leurs valeurs de probabilité croissante de nécessité d'arrosage.

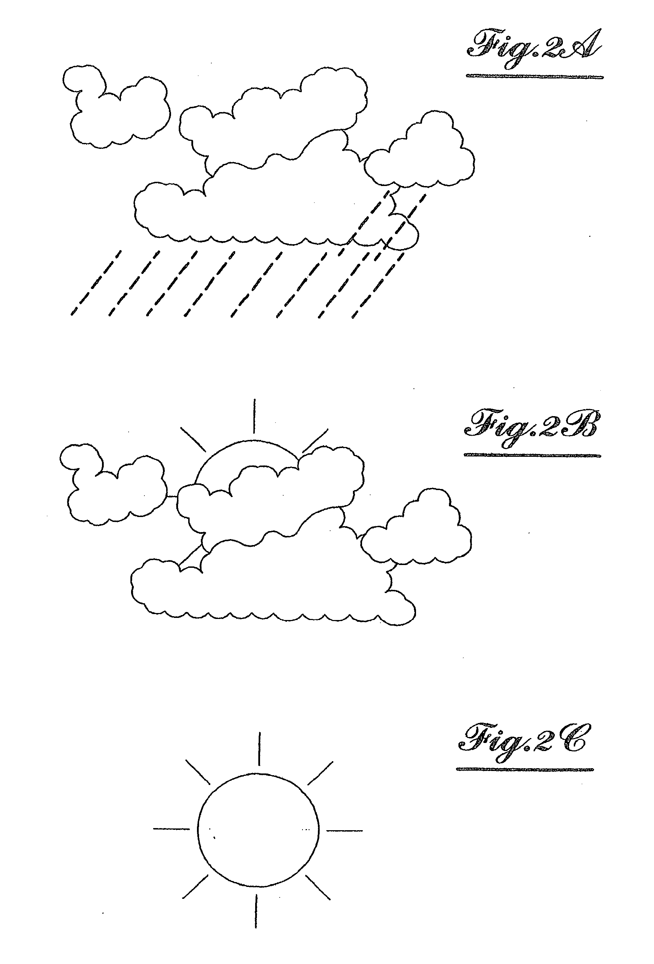

Au lieu d'extraire des informations météorologiques reçues par exemple par Internet, des données relatives à la probabilité de la précipitation de l'eau sous forme de pluie, à l'aide de mots clés, du flux d'informations en code source, on pourrait également utiliser directement les indications prévisionnelles en forme de pictogrammes correspondant aux informations en code source, que ces organismes envoient généralement également. Les figures 2A à 2C donnent, à titre d'exemple, trois pictogrammes indiquant respectivement les catégories "pluie", "incertain" et "manque d'eau".

Concernant le système pour la mise en oeuvre de l'invention tel que représenté schématiquement à la figure 1, il s'agit d'un système micro-électronique, réalisé sous forme d'un seul circuit intégré où d'une combinaison de plusieurs circuits intégrés qui existent sur le marché, dans la mesure où les fonctions qu'ils ont à accomplir sont connues en soi dans le domaine du traitement d'informations. Le système pourrait être équipé d'un dispositif de positionnement géographique, par exemple du type GPS pour n'extraire du flux des informations reçu seulement celles qui concernent le lieu où se trouve le dispositif d'arrosage.

Ainsi, comme il ressort de la description qui précède, le procédé selon l'invention est mise en oeuvre par un système micro-électronique par exemple conçu pour utiliser une connexion internet existante et des prévisions météorologiques existantes, les extraire, les mémoriser et en déduire une régulation de la programmation d'arrosage préalablement établie. Le système comporte des circuits intégrés d'un faible coût, pouvant s'intégrer dans le boîtier de contrôle de l'arrosage, soit sur une carte fille, soit directement sur le circuit principal. Le système implique la connexion à un serveur qui peut être un serveur météorologique ou bien tout autre serveur. L'utilisation de plusieurs serveurs permet de pondérer les informations de prévision si l'utilisation d'une seule source est jugée insuffisamment fiable. Un partenariat avec un serveur météorologique spécifique peut aussi être envisagé pour optimiser le formatage des informations.

Le traitement des informations reçues permet de déterminer les chances de pluie à court terme et d'enregistrer aussi l'historique des pluies effectives. Il permet de prendre aussi en compte la température, le vent, le fait que le ciel soit voilé ou non pour déterminer la rapidité de l'évaporation. Il pourra aussi prendre en compte l'heure de l'arrosage (jour/nuit).

Dans un mode de réalisation simple, le système peut générer par défaut une proposition "faut-il arroser oui ou non" qui masquera les fonctions habituelles du dispositif d'arrosage automatique, par exemple la durée et la fréquence, un oui permettant de continuer l'arrosage aux heures normales et un non suspendant tout arrosage. Dans un mode de réalisation plus perfectionné, le système permet de moduler la durée d'arrosage et, le cas échéant, sa fréquence.

Bien entendu, le procédé selon l'invention pourrait aussi être mis en oeuvre par un ordinateur domestique pourvu d'interface par exemple de type à clavier ou écran.

Il ressort de ce qui précède, que l'invention permet d'économiser l'eau de façon optimale avec tout système d'arrosage automatique en le reliant avantageusement au réseau internet, de façon sans fil ou filaire.

### Annexe 1

Page Internet en code source pour Calais.

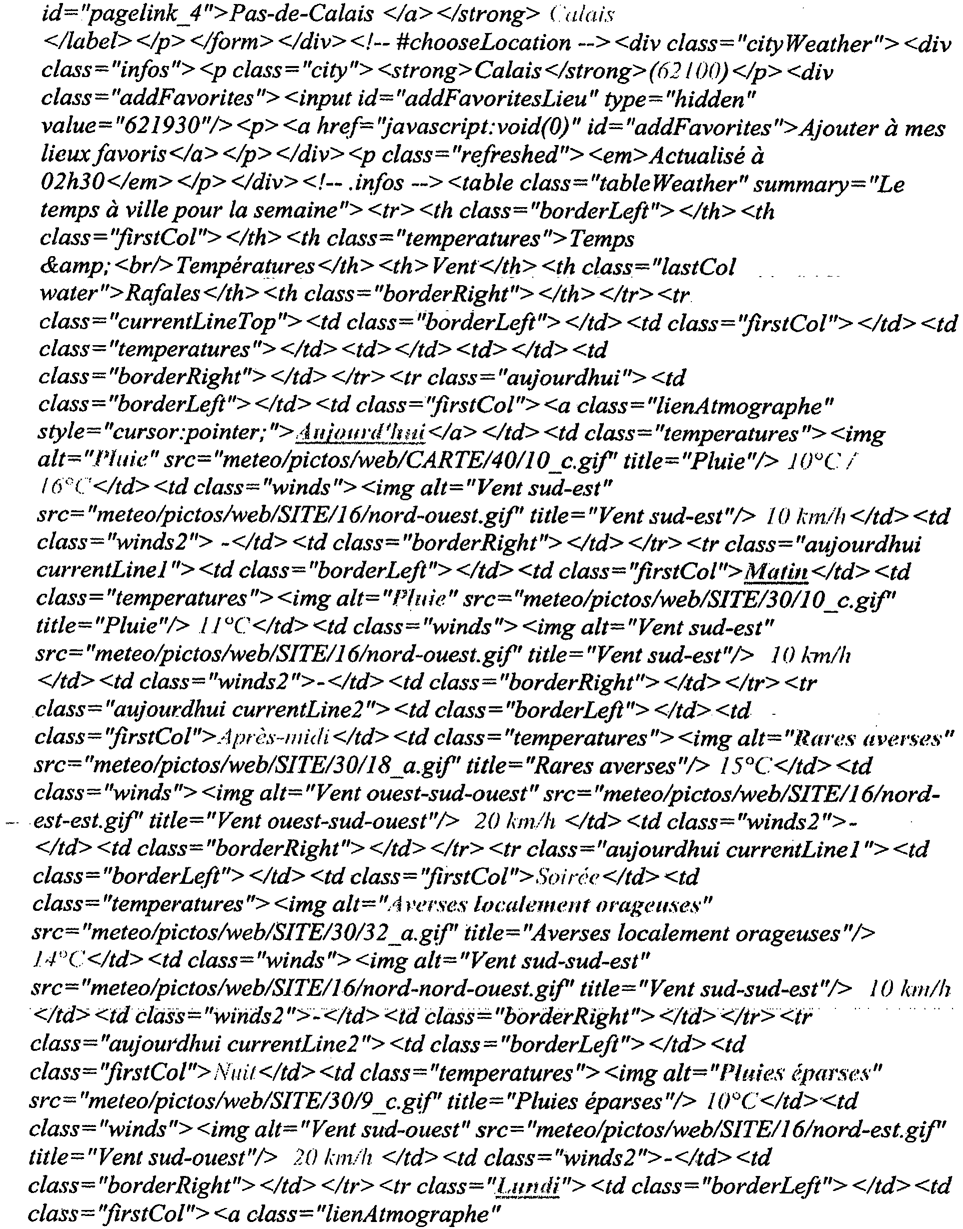

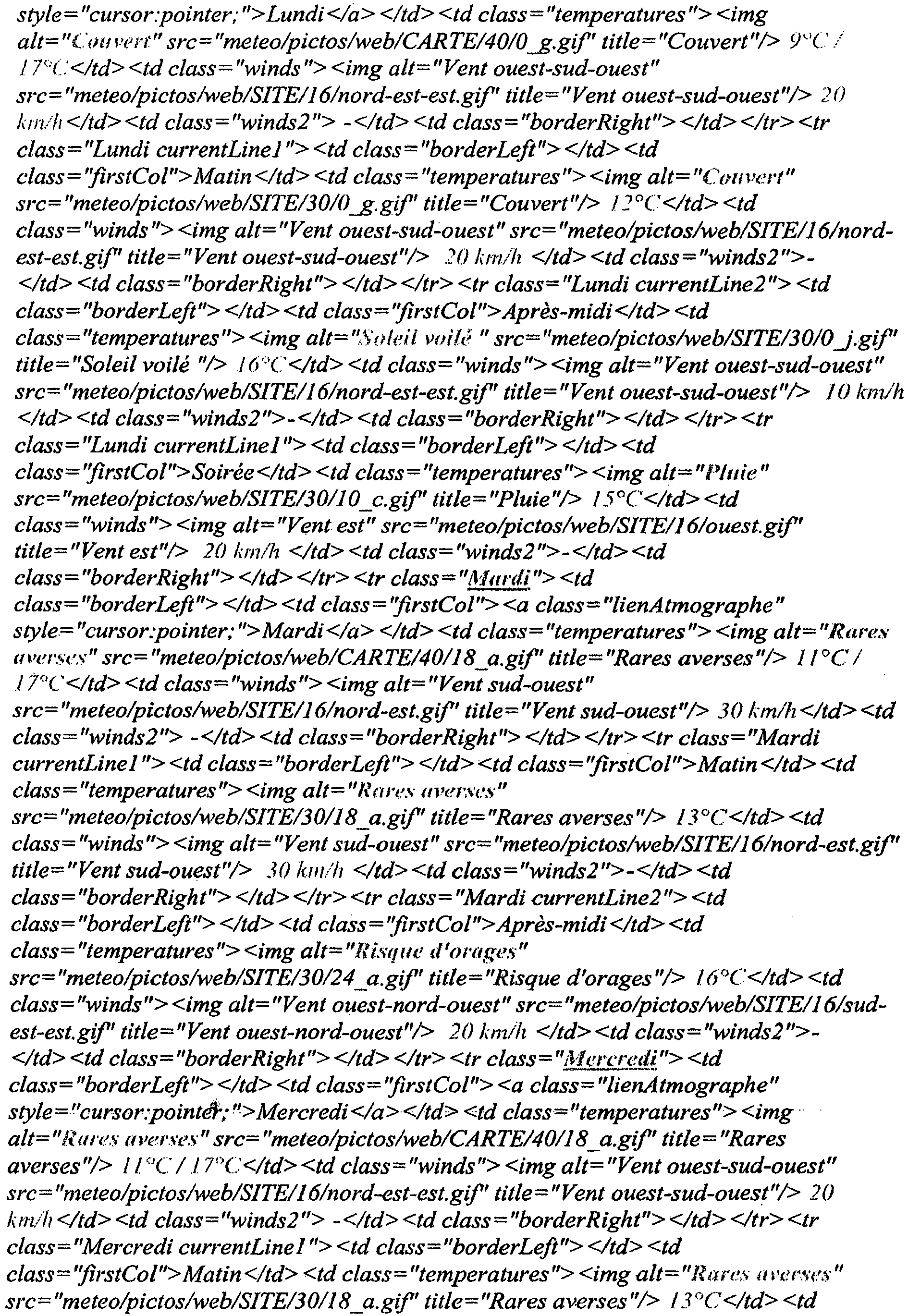

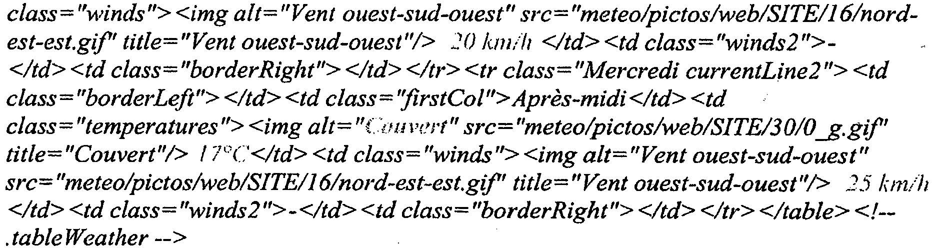

### Annexe 2

Page Internet en code source pour Nice

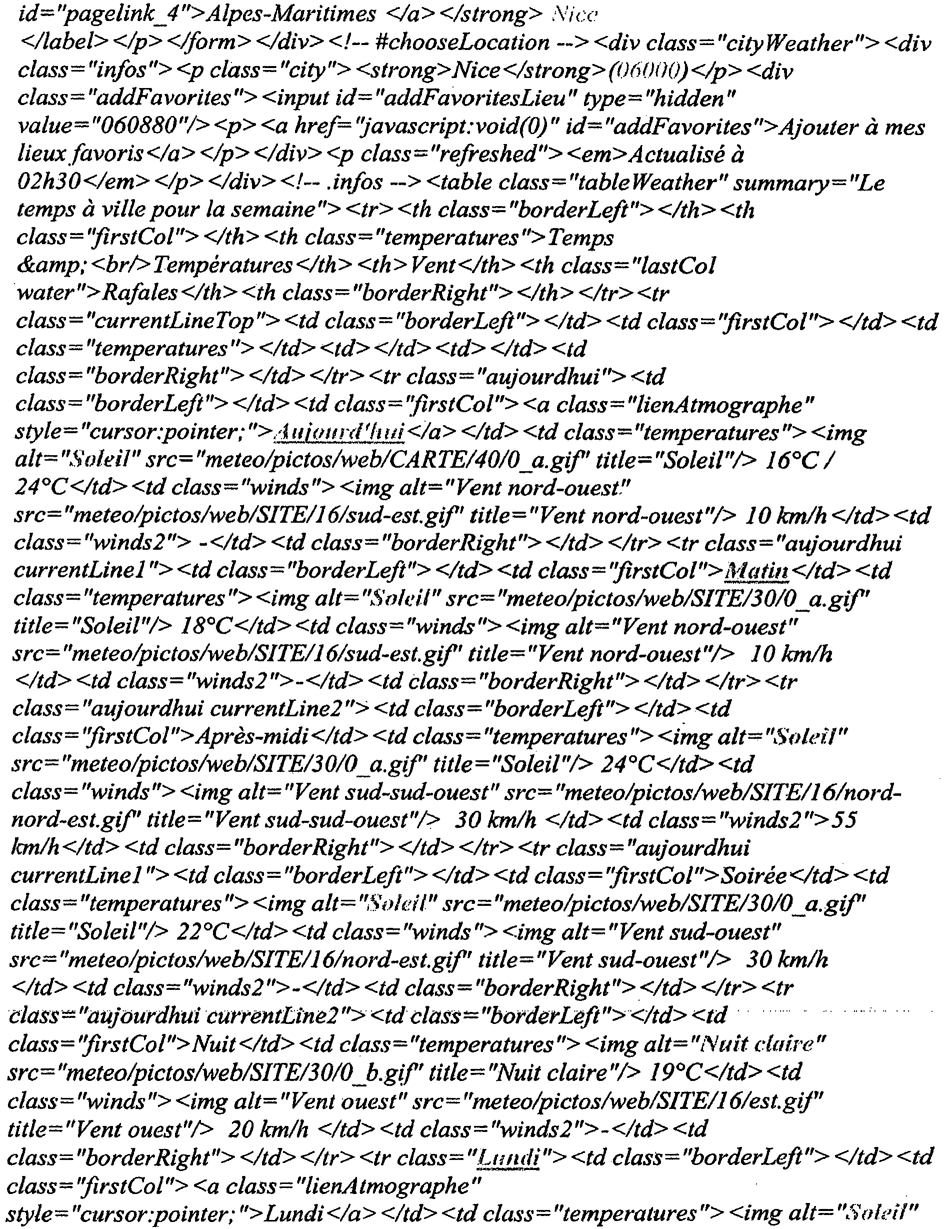

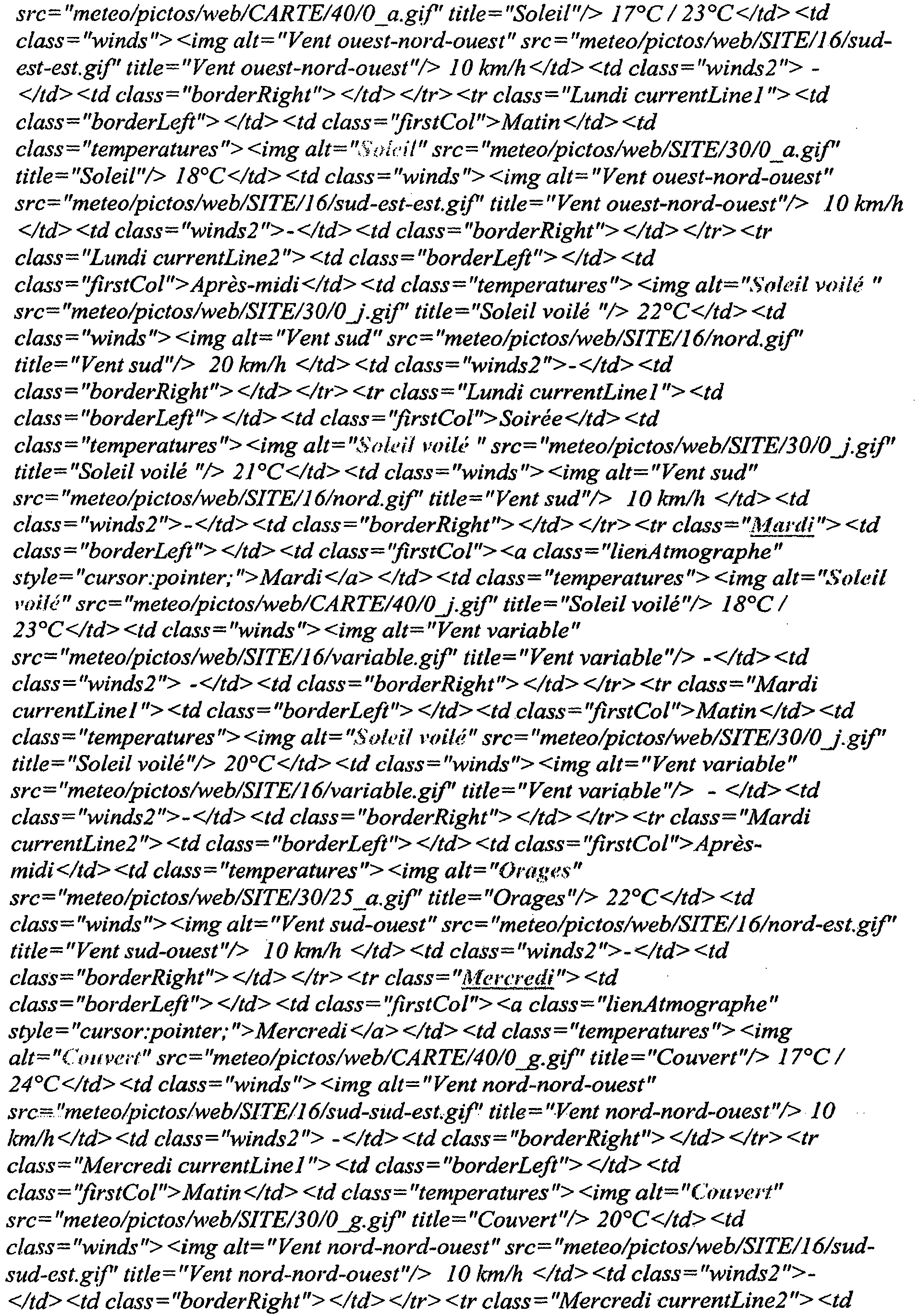

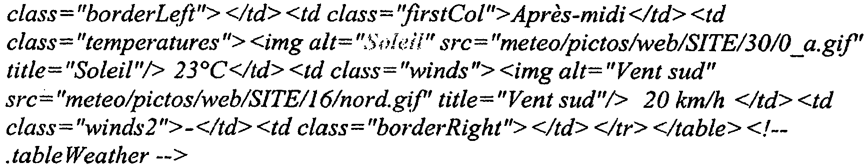

## Revendications

1. Procédé de commande de l'arrosage notamment d'un terrain, selon lequel on modifie un programme d'arrosage automatique de référence, préalablement établi en fonction des informations météorologiques fournies par au moins un serveur d'informations météorologiques, la décision de modification éventuelle est établie à partir d'au moins des informations météorologiques actuelles et relatives aux précipitations d'eau de pluie, **caractérisé en ce que** l'on définit un certain nombre de catégories de situations de précipitations d'eau de pluie, comprenant les catégories « eau » attribuée au moins à une annonce d'une précipitation d'eau de pluie, « manque d'eau » attribuée au moins à une situation de temps ensoleillé et « incertain » attribuée à des situations non assimilable à « eau » ou « manque d'eau », extrait du flux des informations météorologiques reçu les informations météorologiques relatives à la précipitation d'eau de pluie valable pour le site d'arrosage et établit les desdites catégories à partir des informations météorologiques extraits pour des périodes de temps prédéterminées comprenant la période présente, la période suivante, et des périodes futures, stocke les catégories attribuées à ces périodes, pour les utiliser comme catégories des périodes précédentes, et **en ce que** l'on fait la décision sur la modification de l'arrosage de référence à partir des catégories établies par les périodes présente et prochaine, puis par des périodes passées si les catégories des périodes présente et prochaine ne permettent pas de prendre une décision.

2. Procédé selon la revendication 1, **caractérisé en ce que** l'on prend en compte les périodes futures si la prise en compte des périodes présente, suivante et passées ne permettent pas de faire une décision concernant la modification du programme d'arrosage automatique de référence.

3. Procédé selon l'une des revendications 1 ou 2, **caractérisé en ce que** l'on extrait du flux des informations météorologiques reçues les mots clés qui concerne la précipitation d'eau de pluie.

4. Procédé selon l'une des revendications 1 à 3, **caractérisé en ce que** l'on attribue également à certaines situations de température et de vent et de précipitations les catégories eau, incertain et manque d'eau, ces catégories étant utilisées pour orienter les catégories incertain établies à partir des données relatives aux précipitations d'eau, vers les catégories eau ou manque d'eau.

5. Procédé selon l'une des revendications 1 à 4, **caractérisé en ce que** l'on définit un indice d'humidité du sol.

6. Procédé selon l'une des revendications 1 à 5, **caractérisé en ce que** la modification de l'arrosage de référence consiste à moduler la durée et/ou la fréquence d'arrosage.

7. Procédé selon l'une des revendications 1 à 6, **caractérisé en ce qu'**on décide de suspendre l'arrosage automatique de référence lorsque les périodes présentes et suivantes présentent les catégories « eau » sinon on prend en compte au moins les catégories des périodes passées et décident de suspendre l'arrosage lorsque ces périodes présentent la catégorie « eau ».

8. Procédé selon la revendication 7, **caractérisé en ce que**, dans le cas où les conditions d'une suspension de l'arrosage ne sont pas remplies après prise en compte des catégories des périodes présentes, on décide d'arrêter l'arrosage automatique lorsque les périodes futures présentent la catégorie « eau ».

9. Procédé selon l'une des revendications 1 à 8, **caractérisé en ce que** l'on établit pour chaque période les combinaisons possibles de catégories et donne à chaque combinaison un coefficient de pondération de probabilité de précipitation d'eau de pluie.

10. Procédé selon la revendication 9, **caractérisé en ce que**, dans le cas où les périodes présentes, suivantes, passées et futures ne présentent pas la catégorie « eau », on prend la décision de suspension de l'arrosage automatique en fonction des coefficients de pondération des combinaisons des catégories constatées pour l'ensemble des périodes retenues.

11. Système pour la mise en oeuvre du procédé selon l'une des revendications 1 à 10, **caractérisé en ce qu'**il comprend un dispositif micro-électronique adapté à exécuter le procédé selon la revendication 1, pourvu d'un microprocesseur et des moyens mémoire, adaptés pour recevoir des informations météorologiques en provenance d'au moins un serveur d'informations météorologiques, avantageusement par le réseau internet.

12. Système selon la revendication 11, **caractérisé en ce qu'**il comprend un dispositif de positionnement géographique, tel qu'un dispositif du type GPS, pour extraire du flux des informations reçues seulement celles concernant le lieu du dispositif d'arrosage

## Patentansprüche

1. Verfahren zur Steuerung der Bewässerung, vor allem einer Fläche, gemäß dem man ein automatisches Referenz-Bewässerungsprogramm ändert, das zuvor in Abhängigkeit der von mindestens einem meteorologischen Informationsserver bereitgestellten meteorologischen Informationen erstellt wurde, wobei die Entscheidung einer eventuellen Änderung ausgehend von mindestens aktuellen meteorologischen Informationen, die sich auf Regenwasserniederschläge beziehen, vorgenommen wird, **dadurch gekennzeichnet, dass** man eine bestimmte Anzahl von Kategorien von Regenwasserniederschlagssituationen definiert, die die Kategorien "Wasser", zugewiesen mindestens einer Ankündigung eines Regenwasserniederschlags, "Wassermangel", zugewiesen mindestens einer Sonnenscheinzeitsituation und "ungewiss", zugewiesen Situationen, die mit "Wasser" oder "Wassermangel" nicht vergleichbar sind, umfassen, aus dem Strom der empfangenen meteorologischen Informationen die meteorologischen Informationen entnimmt, die sich auf den Regenwasserniederschlag bezieht, der für den Bewässerungsstandort gilt, und die Kategorien aus meteorologischen Informationen, die für vorbestimmte Zeitabschnitte entnommen wurden, die den gegenwärtigen Zeitabschnitt, den nächsten Zeitabschnitt und zukünftige Zeitabschnitte umfassen, erstellt, die diesen Zeitabschnitten zugewiesenen Kategorien speichert, um sie als Kategorien der vorangehenden Zeitabschnitte zu verwenden, und dass man die Entscheidung über die Änderung der Referenzbewässerung ausgehend von Kategorien, die von dem gegenwärtigen und nächsten Zeitabschnitt erstellt wurden, danach von vergangenen Zeitabschnitten, wenn die Kategorien des gegenwärtigen und nächsten Zeitabschnitts keine Entscheidung erlauben, fällt.

2. Verfahren nach Anspruch 1, **dadurch gekennzeichnet, dass** man die zukünftigen Zeitabschnitte berücksichtigt, wenn die Berücksichtigung des gegenwärtigen, nächsten und der vergangenen Zeitabschnitte keine Entscheidung in Bezug auf die Änderung des automatischen Referenz-Bewässerungsprogramms erlauben.

3. Verfahren nach einem der Ansprüche 1 oder 2, **dadurch gekennzeichnet, dass** man aus dem Strom der empfangenen meteorologischen Informationen die Schlüsselwörter entnimmt, die den Regenwasserniederschlag betreffen.

4. Verfahren nach einem der Ansprüche 1 bis 3, **dadurch gekennzeichnet, dass** man ebenfalls bestimmten Temperatur- und Wind- und Niederschlagssituationen die Kategorien Wasser, ungewiss und Wassermangel zuweist, wobei diese Kategorien verwendet werden, um die Kategorien ungewiss, die ausgehend von Daten, die sich auf Wasserniederschläge beziehen, erstellt wurden, in Richtung der Kategorien Wasser oder Wassermangel zu orientieren.

5. Verfahren nach einem der Ansprüche 1 bis 4, **dadurch gekennzeichnet, dass** man einen Bodenfeuchtigkeitsindex definiert.

6. Verfahren nach einem der Ansprüche 1 bis 5, **dadurch gekennzeichnet, dass** die Änderung der Referenzbewässerung darin besteht, die Bewässerungsdauer und/oder das Bewässerungsintervall zu modulieren.

7. Verfahren nach einem der Ansprüche 1 bis 6, **dadurch gekennzeichnet, dass** man entscheidet, die automatische Referenzbewässerung auszusetzen, wenn die gegenwärtigen und folgenden Zeitabschnitte die Kategorien "Wasser" aufweisen, anderenfalls berücksichtigt man mindestens die Kategorien der vergangenen Zeitabschnitte und entscheidet, die Bewässerung auszusetzen, wenn diese Zeitabschnitte die Kategorie "Wasser" aufweisen.

8. Verfahren nach Anspruch 7, **dadurch gekennzeichnet, dass** man, wenn die Bedingungen einer Aussetzung der Bewässerung nach Berücksichtigung der Kategorien der gegenwärtigen Zeitabschnitte nicht erfüllt sind, entscheidet, die automatische Bewässerung auszusetzen, wenn die zukünftigen Zeitabschnitte die Kategorie "Wasser" aufweisen.

9. Verfahren nach einem der Ansprüche 1 bis 8, **dadurch gekennzeichnet, dass** man für jeden Zeitabschnitt die möglichen Kategorienkombinationen erstellt und jeder Kategorie einen Wichtungskoeffizienten der Regenwasserniederschlagswahrscheinlichkeit verleiht.

10. Verfahren nach Anspruch 9, **dadurch gekennzeichnet, dass** man, wenn die gegenwärtigen, nächsten, vergangenen und zukünftigen Zeitabschnitte die Kategorie "Wasser" nicht aufweisen, entscheidet, die automatische Bewässerung in Abhängigkeit von den Wichtigungskoeffizienten der Kombinationen der Kategorien auszusetzen, die für die Gesamtheit der ermittelten Zeitabschnitte festgestellt wurden.

11. System für die Umsetzung des Verfahrens nach einem der Ansprüche 1 bis 10, **dadurch gekennzeichnet, dass** es eine mikroelektronische Vorrichtung, die ausgebildet ist, das Verfahren nach Anspruch 1 durchzuführen, umfasst, die mit einem Mikroprozessor und Speichermitteln ausgestattet ist, die ausgebildet sind, um meteorologische Informationen von mindestens einem Server meteorologischer Informationen vorzugsweise vom Internetnetzwerk zu empfangen.

12. System nach Anspruch 11, **dadurch gekennzeichnet, dass** es eine geografische Positionierungsvorrichtung wie eine Vorrichtung vom Typ GPS umfasst, um aus dem Strom der empfangenen Informationen nur die Informationen zu entnehmen, die den Ort der Bewässerungsvorrichtung betreffen.

## Claims

1. An irrigation process in particular for a plot of land, in which a previously established reference automatic irrigation program is modified, as a function of weather information provided by at least one weather information server, the decision to make any changes is based on at least current weather information relative to rain precipitation, **characterized in that** a certain number of rain precipitation situation categories are defined, comprising the "water" category assigned to at least one announcement of rain precipitation, the "lack of water" category assigned to at least one sunny weather situation, and the "uncertain" category, assigned to situations not comparable to "water" or "lack of water", the weather information relative to rain precipitation valid for the irrigation site is extracted from the received stream of weather information, and subcategories are established from the extracted meteorological information for predetermined time periods comprising the present period, the next period, and future periods, the categories assigned to those periods are stored so that they may be used as categories of previous periods, and **in that** the decision to modify the reference irrigation is made based on categories established by the current and future periods, then by past periods if the present and near future periods do not make it possible to make a decision.

2. The method according to claim 1, **characterized in that** the future periods are taken into account if taking the present, next and past periods into account does not make it possible to make a decision regarding the modification of the reference automatic irrigation program.

3. The method according to one of claims 1 or 2, **characterized in that** the keywords relating to rain precipitation are extracted from the received stream of weather information.

4. The method according to one of claims 1 and 3, **characterized in that** certain temperature, wind and precipitation categories are also assigned to the water, uncertain and lack of water categories, the categories being used to orient the uncertain categories established water precipitation-related categories toward water or lack of water categories.

5. The method according to one of claims 1 to 4, **characterized in that** a ground humidity index is defined.

6. The method according to one of claims 1 to 5, **characterized in that** the modification of the reference irrigation consists of modulating the duration and/or frequency of the irrigation.

7. The method according to one of claims 1 to 6, **characterized in that** the decision is made to suspend the automatic reference irrigation when the present and subsequent periods are in the "water" categories, or at least the categories of the past periods are taken into account and the decision is made to suspend irrigation when those periods are in the "water" category.

8. The method according to claim 7, **characterized in that**, in the event the conditions for a suspension of irrigation are not met after taking the categories of the present periods into account, the decision is made to stop automatic irrigation when the future periods have the "water" category.

9. The method according to one of claims 1 to 8, **characterized in that** for each period, the possible combinations of categories are established and each combination is given a weight coefficient based on the likelihood of rain precipitation.

10. The method according to claim 9, **characterized in that**, in the event the current, subsequent and past and future periods do not have the "water" category, the decision is made to suspend automatic irrigation based on the weight coefficients of the combinations of categories recognized for all of the selected periods.

11. A system for carrying out the method according to one of claims 1 to 10, **characterized in that** it comprises a microelectronic device suitable for carrying out the method according to claim 1, provided with a microprocessor and memory means, suitable for receiving weather information from at least one weather information server, advantageously by Internet.

12. The system according to claim 11, **characterized in that** it comprises a geographical positioning device, such as a GPS-type device, for extracting only the information regarding the location of the irrigation device from the received stream of information.
